Europäisches Patentamt

**European Patent Office**

**Office européen des brevets**

(11) Numéro de publication: **0 379 421**

**A1**

## (12) DEMANDE DE BREVET EUROPEEN

(21) Numéro de dépôt: **90400116.1**

(22) Date de dépôt: **16.01.90**

(51) Int. Cl.5: **C04B 28/02, H02G 9/02**

(30) Priorité: **16.01.89 FR 8900458**

(43) Date de publication de la demande:
**25.07.90 Bulletin 90/30**

(84) Etats contractants désignés:
**AT BE CH DE DK ES FR GB GR IT LI LU NL SE**

(71) Demandeur: **ELECTRICITE DE FRANCE
Service National
2, rue Louis Murat
F-75008 Paris(FR)**

(72) Inventeur: **Dorison, Eric
1 Rue des Moulins Dormelles
F-77130 Montereau(FR)**

(74) Mandataire: **Mestre, Jean et al
c/o CABINET LAVOIX 2, place d'Estienne
d'Orves
F-75441 Paris Cédex 09(FR)**

(54) **Mortier maigre hygroscopique à résistivité thermique réduite, procédé de mise en oeuvre et application.**

(57) Le mortier est fabriqué à l'aide d'une composition qui comprend pour un mètre cube de sable dont la granulométrie ne dépasse pas 3 mm, de 60 à 100 kg environ de ciment et de 0,5 à 2 kg environ de poudre hygroscopique faite d'un polymère de synthèse de préférence non biodégradable dont les grains ont une taille comprise entre 0,8 et 3 mm environ. Ces ingrédients sont destinés à être mélangés à une quantité d'eau comprise entre 200 et 300 l environ.

Application à l'enrobage des câbles électriques de transport d'énergie souterrains pour les protéger mécaniquement et assurer un environnement ayant de bonnes caractéristiques de dissipation de la chaleur, afin d'en augmenter la capacité de transport d'énergie.

EP 0 379 421 A1

# Mortier maigre hygroscopique à résistivité thermique réduite, procédé de mise en oeuvre et application.

La présente invention est relative à l'enrobage des câbles électriques souterrains en vue de leur protection et a plus particulièrement pour objets une composition et un procédé de mise en oeuvre d'un mortier maigre hygroscopique à résistivité thermique réduite ainsi que leur application aux câbles électriques souterrains de transport d'énergie.

Comme on le sait, il est classique d'enterrer des câbles de transport d'énergie électrique isolés au fond de fouilles faites dans le sol. Lorsqu'un câble électrique est ainsi enterré il est sujet à des risques d'endommagement mécaniques desquels il faut le protéger et il est aussi sujet à un échauffement thermique qui limite son aptitude au transport de l'énergie électrique.

Pour résoudre ce double problème, diverses solutions ont déjà été proposées.

Comme il est connu, il faut qu'un tel câble électrique soit protégé efficacement des agressions potentielles, par le milieu environnant lui même dans lequel il est placé et aussi des interventions de personnes creusant le sol à proximité de l'endroit où le câble est placé soit à l'occasion de travaux sur le câble proprement dit soit lors de travaux de terrassement à proximité de celui-ci.

Il faut à une telle protection une longévité comparable à celle du câble mais il faut aussi que ce câble demeure relativement facilement accessible en cas d'incident, c'est-à-dire qu on puisse éliminer simplement la protection placée sur le câble.

Ce type de protection doit en outre, de préférence, pouvoir être mis en place d'une manière la plus automatique possible avec un nombre minimal d'interventions manuelles et, de plus, elle doit encore permettre une bonne évacuation de la chaleur dégagée par les pertes électriques dans le câble lorsqu'il est parcouru par le courant électrique qu'il doit transporter.

Aucune des solutions actuellement utilisées ne satisfait à l'ensemble de ces conditions.

Par exemple, une fois la fouille faite et le câble mis en place dans celle-ci, on utilise des remblais de composition déterminée ou de la terre à laquelle sont mêlés des adjuvants, qui confèrent les propriétés thermiques recherchées mais qui n'assurent pas une protection mécanique efficace vis-à-vis par exemple des coups de pioche ou de godet des pelleteuses.

On utilise aussi des caniveaux qui, eux, assurent une bonne protection, entre autres, mécanique mais dont la mise en oeuvre est compliquée et coûteuse.

On utilise aussi des fourreaux qui assurent une bonne protection mécanique et qui peuvent voir leur efficacité thermique pour l'évacuation des calories améliorée à l'aide d'un refroidissement forcé. Mais comme pour la solution précédente des caniveaux, cette pratique nécessite de nombreuses interventions difficilement automatisables.

L'invention a pour but de remédier à ce type d'inconvénients par un enrobage des câbles électriques placés dans une fouille, à l'aide d'un mortier maigre hygroscopique à résistivité thermique réduite.

L'invention a pour objet une composition pour la fabrication d'un mortier maigre hygroscopique à résistivité thermique réduite qui est caractérisée en ce qu'elle comprend pour un mètre cube de sable, de 60 à 100 kg de ciment et de 0,5 à 2 kg de poudre hy groscopique qui sont destinés à être mélangés à une quantité d'eau comprise entre 200 et 300 l.

Selon une caractéristique de l'invention, on utilise comme poudre hygroscopique un polymère de synthèse de préférence non biodégradable fait à l'aide d un polyacrylamide réticulé ou d'un hydroxyéthyl cellulose dont les grains ont une taille comprise entre 0,8 et 3 mm et pour sable un sable dont la granulométrie ne dépasse pas 3 mm.

L'invention a aussi pour objet un procédé pour la mise en oeuvre de cette composition de mortier maigre hygroscopique à résistivité thermique réduite selon lequel la poudre hygroscopique est humidifiée avant son mélange au sable et au ciment ou bien est mélangée séche au sable et au ciment et humidifiée avec ceux-ci ultérieurement par exemple pendant son transport sur le lieu d'utilisation au cours duquel se fait aussi le malaxage.

L'invention a aussi pour objet l'application d'un tel mortier maigre hygroscopique à résistivité thermique réduite à la protection des câbles électriques de transport d'énergie souterrains notamment dans des fouilles.

D'autres caractéristiques de l'invention apparaitront à la lecture de la description et des revendications qui suivent données seulement à titre d'exemple.

Les processus de fabrication des mortiers à base de ciment utilisant du sable et éventuellement d'autres ingrédients sont bien connus dans la technique c'est pourquoi on ne décrira que ce qui a trait directement ou indirectement à l'invention. Pour le surplus, le spécialiste de la technique considérée puisera dans les solutions classiques à sa disposition pour faire face aux problèmes particuliers auxquels il est confronté.

Une composition pour la fabrication d'un mortier maigre hygroscopique à résistivité thermique réduite comprend, par exemple, pour un mètre cube de sable dont la granulométrie ne dépasse pas 3 mm, 75 kg environ de ciment, 1 kg environ de poudre hygroscopique et 240 l environ d'eau.

Une autre formulation de la composition selon l'invention comprend pour, un mètre cube de sable de même de granulomètrie, 80 kg environ de ciment, 1 kg environ de poudre hygroscopique et 250 l environ d'eau.

Différents procédés de mises en oeuvre du mortier dont on vient d'indiquer des compositions peuvent être pratiques.

Par exemple, on commence par humidifier la poudre hygroscopique avec pratiquement la totalité (environ 80%) de la quantité d'eau requise pendant 30 min et, ensuite on ajoute à la poudre ainsi humidifiée le ciment, le sable et le reste d'eau (environ 20%) éventuel qu'on malaxe en semble pendant au moins 30 min. Le mortier ainsi préparé est ensuite mis en place, sans être tassé, dans la fouille où a été déposé le câble afin de l'enrober.

Selon une autre technique on mélange la poudre hygroscopique sèche au sable et au ciment eux aussi secs puis on leur ajoute la quantité d'eau nécessaire c'est-à-dire 250 l environ et l'on assure le malaxage pendant une heure environ. Après quoi le mortier ainsi préparé peut être mis en place et éventuellement tassé au fur et à mesure de la mise en place, par exemple à l'aide d'outils à main du genre dame.

Comme on le comprend aisément le deuxième procédé indiqué convient particulièrement bien à la préparation du mélange sec dans un chantier centralisé de fabrication de béton puis à son transport à l'aide d'un camion spécialement aménagé connu sous le nom de "toupie" où le mélange sec est humidifié et malaxé pour être prêt à l'emploi lorsque le véhicule parvient sur le lieu des travaux où doit se faire l'enrobage. Le déversement du mortier dans la fouille peut être assuré à partir du véhicule à l'aide d'une trémie en forme de goulotte ou d'un tapis convoyeur, au besoin avec utilisation d'une pompe à béton.

Les câbles à enrober en mettant à profit l'invention, sont soit directement posés sur le sol en fond de fouilles soit posés sur un premier lit de mortier ; ils sont ensuite complètement noyés dans le mortier selon l'invention sur une hauteur d'au moins 5 cm.

Les modes opératoires indiqués pour la mise en oeuvre du mortier selon l'invention sont importants et doivent être suivis avec une certaine rigueur. En effet, on a constaté que si les compositions données à titre d'exemples étaient utilisées autrement les résultats obtenus ne donnaient pas entière satisfaction. Ainsi, on a pu constater qu'en mélangeant simultanément le ciment, le sable et la poudre avec la quantité d'eau requise puis en opérant l'enrobage à l'aide de ce mortier immédiatement ou après un repos de 30 min environ, l'enrobage se fissurait et le plus souvent s'effondrait après une durée plus ou moins longue.

La durée de malaxage est particulièrement importante car imposée par le gonflement de la poudre hygroscopique qui absorbe une partie de la quantité d'eau nécessaire. Si on ne respecte pas une durée minimale, le gonflement de la poudre nuit à la tenue du mortier.

La technique selon l'invention permet d'assurer une bonne protection mécanique des câbles car le mortier maigre hygroscopique à rèsistivité thermique réduite résiste bien aux agressions mécaniques des outils de terrassement. De plus la technique selon l'invention n'est pas agressive à l'encontre des câbles car le contrôle de la granulométrie du sable permet de limiter le risque de présence de cailloux tranchants susceptibles d'endommager leurs revêtements. En outre, le faible dosage en ciment est une garantie de possibilité d'une destruction de l'enrobage relativement facile à l'aide d'outils, de matériels à main et on notera que la résistance peut en être modifiée, dans certaines latitudes et, en particulier, amoindrie si l'on augmente la teneur en eau.

Grâce à l'enrobage selon l'invention il est possible d'abaisser d'environ une dizaine de degrés la température superficielle de la gaine d'un câble noyé dans ce mortier. Par exemple des essais faits sur des câbles à 90 kV montrent qu'ont peut augmenter la capacité de transport de 10 à 15 % voire jusqu'à 25 % du fait que la résistivité thermique de l'enrobage est notablement petite, toutes choses égales par ailleurs.

On observera que la technique qui vise à réduire la résistivité thermique dè l'environnement en incorporant une poudre hygroscopique au milieu s'applique aussi à d'autres situations qu'à la fabrication d'un mortier maigre. Par exemple, on peut mélanger directement une telle poudre hygroscopique à la terre du sol à raison d'environ 5 kg de poudre par mètre cube de sol de la fouille. Dans ce cas, seules les couches directement situées au niveau du câble sur une hauteur pratiquement égale à la largeur de la tranchée peuvent être mélangées à de la poudre hygroscopique ou bien la totalité des terres de la fouille peuvent être mélangées. Ceci permet de diminuer la résistivité thermique du sol de 55 à 70 % environ et donc d'augmenter corrélativement la capacité de transport du câble de 16 à 25 % environ, toutes choses égales par ailleurs. Mais il est clair qu'alors aucune protection n'est donnée au câble que ce soit contre les agressions mécaniques d'outils de terrassement et des roches du sol ou contre l'agressivité du sol lui même.

On comprend tout l'intérêt de la technique selon l'invention puisqu'on peut fabriquer le mélange à l'état sec et l'humidifier et le malaxer au cours de son transport de manière à ce qu'il soit prêt à l'emploi rendu sur le lieu d'utilisation, et qu'on peut s'en servir automatiquement à l'aide d'équipements courants.

**Revendications**

1. Composition pour la fabrication d'un mortier maigre hygroscopique à résistivité thermique réduite contenant une poudre hygroscopique qui est caractérisée en ce qu'elle comprend pour un mètre cube de sable de 60 à 100 kg environ de ciment et de 0,5 à 2 kg environ de poudre hygroscopique qui sont destinés à être mélangés à une quantité d'eau comprise entre 200 et 300 l environ.

2. Composition selon la revendication 1, caractérisée en ce que la poudre hygroscopique est un polymère de synthèse.

3. Composition selon la revendication 1 ou 2, caractérisée en ce que la poudre hygroscopique est non biodégradable.

4. Composition selon l'une quelconque des revendication 1 à 3, caractérisée en ce que la poudre hygroscopique est un polyacrylamide réticulé.

5. Composition selon l'une quelconque des revendication 1 et 2, caractérisée en ce que la poudre hygroscopique est de l'hydroxyéthylcellulose ou du carboxylméthylcellulose.

6. Composition selon l'une quelconque des revendication 1 à 5, caractérisée en ce que la taille des grains de poudre hygroscopique est comprise entre 0,8 et 3 mm environ.

7. Composition selon l'une quelconque des revendication 1 à 6, caractérisée en ce que la granulométrie du sable ne dépasse pas 3 mm environ.

8. Procédé pour la mise en oeuvre de la composition selon l'une quelconque des revendications 1 à 7, caractérisé en ce qu on humidifie la poudre avec 250 l environ d'eau pendant 30 min, on mélange cette poudre ainsi humidifiée avec le ciment et le sable et on met en place ce mortier sans le tasser.

9. Procédé pour la mise en oeuvre de la composition selon l'une quelconque des revendications 1 à 7, caractérisée en ce qu'on mélange le ciment, le sable et la poudre hygroscopique avec 250 l environ d'eau, on malaxe pendant 1 h environ, on met en place ce mortier et on le tasse.

10. Procédé selon la revendication 9, caractérisée en ce qu'on prépare le mélange à l'état sec de la composition à poste fixe et en ce qu'on humidifie et malaxe ce mélange pendant son transport sur le lieu d'utilisation.

11. Enrobage pour câbles de transport d'énergie électrique souterrains déposés dans une fouille pour assurer à la fois leur protection mécanique et leur refroidissement fait d'un mortier maigre hygroscopique dont la composition est conforme à l'une quelconque des revendications 1 à 7.

12 - Enrobage selon la revendication 11 dont l'épaisseur est de l'ordre de 5 cm au moins pour noyer totalement les câbles.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | IEEE SUMMER MEETING AND INTERNATIONAL SYMPOSIUM ON HIGH POWER TESTING, Portland, Oregon, US, 18-23 juillet 1971, pages 1-6; W.A. THUE: "Thermal resistivity of concrete" * Page 1, colonne 2, paragraphe 2 * --- | 1-12 | C 04 B 28/02 H 02 G 9/02 |
| Y | DE-A-2 737 873 (ELECTRIC POWER RESEARCH INSTITUTE) * Revendications 1,2,9-12; pages 19-20 * --- | 1-4,6-12 | |
| Y | FR-A-2 207 335 (AEG-TELEFUNKEN KABELWERKE AG, RHEYDT) * Revendications 1,5-8 * --- | 5 | |
| X | DE-B-1 283 726 (ARDEX CHEMIE GmbH) * Revendications 1-4 * ----- | 1-10 | |

| | | | DOMAINES TECHNIQUES RECHERCHES (Int. Cl.5) |
|---|---|---|---|
| | | | C 04 B 24/00 C 04 B 28/00 H 01 B 7/00 H 02 G 9/00 |

Le présent rapport a été établi pour toutes les revendications

| Lieu de la recherche | Date d'achèvement de la recherche | Examinateur |
|---|---|---|
| LA HAYE | 19-03-1990 | HAUCK, H.N. |

EPO FORM 1503 03.82 (P0402)